# FASCICULE DE BREVET EUROPEEN

(11) **EP 2 480 767 B1**
(45) Date de publication et mention de la délivrance du brevet: **10.06.2015**
(21) Numéro de dépôt: 10769011.7
(22) Date de dépôt: 21.09.2010
(51) Int. Cl.: F02B 29/04

(54) **PROCEDE DE GESTION D'UN MODULE D'ECHANGE AIR/EAU POUR LA REGULATION EN TEMPERATURE DES GAZ D'ADMISSION D'UN MOTEUR THERMIQUE**
VERWALTUNGSVERFAHREN FÜR LUFT/WASSERTAUSCHMODUL ZUM EINSTELLEN DER TEMPERATUR EINER EINLASSGASMISCHUNG IN EINEM VERBRENNUNGSMOTOR
METHOD FOR MANAGING AN AIR/WATER EXCHANGE MODULE FOR THE TEMPERATURE REGULATION OF THE INTAKE FLOW OF AN IC COMBUSTION ENGINE

(30) Priorité: 22.09.2009 FR 0904506
(43) Date de publication de la demande: 01.08.2012
(73) Titulaire: Valeo Systèmes de Contrôle Moteur, 95800 Cergy (FR)
(72) Inventeur: POTTEAU, Sébastien, F-78510 Triel sur Seine (FR); VOGEL, Jean-Bastien, F-95630 Meriel (FR)
(86) Numéro de dépôt international: PCT/FR2010/051975
(87) Numéro de publication internationale: WO 2011/036399

(56) Documents cités:
- EP-A2- 2 088 297
- JP-A- 61 065 015
- US-A- 5 036 668
- US-A1- 2004 244 782
- US-A1- 2005 005 919

## Description

La présente invention a trait au domaine des échangeurs de chaleur permettant le refroidissement des gaz d'admission à introduire dans les chambres de combustion d'un moteur thermique.

Elle concerne plus particulièrement un procédé de gestion d'un module d'échange air/eau pour la régulation en température des gaz d'admission qui sont par exemple un mélange d'air d'admission et de gaz d'échappement recirculés.

Dans un moteur thermique turbocompressé, par exemple, on mélange les gaz d'échappement et l'air extérieur pour alimenter les chambres de combustion. Ce mélange appelé air de suralimentation peut atteindre des températures très élevées et pour le refroidir il est connu d'utiliser un module d'échange air/eau. Dans ce module d'échange, l'air de suralimentation passe dans un premier circuit et échange ses calories avec un second circuit de refroidissement en eau. Le second circuit de refroidissement en eau est quant à lui généralement refroidit par un radiateur disposé en face avant du véhicule.

De manière à permettre au mélange d'accéder directement aux chambres de combustion, sans passer dans l'échangeur, il est connu, par exemple du document EP2088297, de disposer au niveau du module d'échange des moyens de dérivation permettant de diriger tout ou partie du flux du mélange dans une conduite contournant l'échangeur, le contrôle du flux étant réalisé par une vanne pilotée.

Cette dérivation du flux est réalisée lorsque la température du mélange d'air suralimenté se situe en dessous d'une température donnée. Cette dérivation permet notamment de faciliter les démarrages à froid et évite également de réchauffer inutilement le circuit de refroidissement en eau alors même que le mélange d'air suralimenté est à une température adéquate pour être introduit dans le moteur.

Cette gestion du module d'échange air /eau est généralement satisfaisante toutefois il est apparu à la demanderesse que la gestion du module d'échange n'était pas adapté à certaines situations.

### OBJET DE L'INVENTION

La présente invention a pour but de proposer un procédé de gestion d'un module d'échange air/eau pour la régulation en température des gaz d'admission, dans lequel la gestion permet notamment d'améliorer l'efficacité du circuit de refroidissement en eau.

### RESUME DE L'INVENTION

A cet effet la présente invention concerne un procédé de gestion d'un module d'échange air/eau pour la régulation en température des gaz d'admission d'un moteur thermique, ledit module comportant un échangeur air/eau et des moyens de dérivation permettant aux gaz d'admission de contourner l'échangeur, caractérisé en ce que les moyens de dérivation sont commandés en fonction de la température de l'eau de l'échangeur.

Les moyens de dérivation peuvent être commandés de sorte que les gaz d'admission sont transmis au moins en partie dans l'échangeur lorsque la température T1 des gaz d'admission est inférieure à la température T3 de l'eau de l'échangeur air/eau.

Les moyens de dérivation peuvent également être commandés de sorte que les gaz d'admission sont transmis au moins en partie dans l'échangeur lorsque la température T1 des gaz d'admission est supérieure à une température T2 prédéterminée.

Le procédé de gestion permet par conséquent un échange de frigories du circuit contenant le mélange vers le circuit de refroidissement en eau lorsque les gaz d'admission sont à une température inférieure à celle de l'eau du circuit de refroidissement. L'eau du circuit de refroidissement est par conséquent refroidie par les gaz d'admission permettant d'une part de moins recourir au radiateur de la face avant et d'autre part d'abaisser plus rapidement sa température. Le circuit de refroidissement en eau sera ensuite plus efficace lorsque l'air suralimenté devra être refroidi à son tour.

Ce procédé de gestion sera particulièrement avantageux par rapport au procédé de gestion classique lors des phases de décélération du véhicule.

L'invention vise également une unité de contrôle moteur (en anglais : ECU « Engine Control Unit ») adaptée à mettre en oeuvre le procédé décrit.

### BREVE DESCRIPTION DES DESSINS

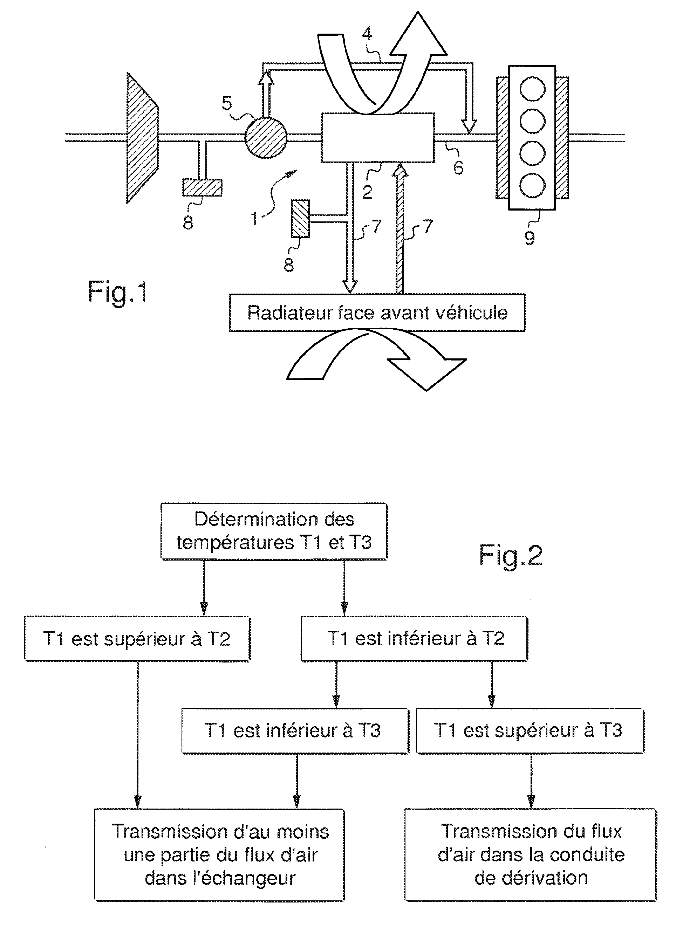

La présente invention sera mieux comprise à la lecture d'un exemple détaillé de réalisation en référence à aux figures 1 et 2 annexées, fournies à titre d'exemple non limitatif, et dans lesquelles :
- la figure 1 représente, de manière schématique, un exemple de réalisation d'un module d'échange,
- la figure 2 représente un diagramme de fonctionnement du procédé de gestion conforme à l'invention.

En se reportant à la figure 1 on voit représenté un module d'échange 1 ce module comporte un échangeur 2, des moyens de dérivation 3 comportant une conduite 4 et une vanne 5 pilotée par des moyens de commande non représenté dans les dessins annexés. L'échangeur 2 comprend un circuit de passage 6 de l'air suralimenté à une température T1 et un circuit de refroidissement 7 comportant de l'eau à une température T3. Cette eau de refroidissement est refroidie en face avant du véhicule à l'aide d'un radiateur basse température.

En se reportant à la figure 2 on voit représenté un diagramme de fonctionnement du procédé de gestion. Dans une première étape on détermine les températures T1 de l'air suralimenté et T2 de l'eau du circuit de refroidissement 7.

A cette fin le module d'échange 1 comporte avantageusement des capteurs 8 de température permettant la prise de température de l'air suralimenté en amont de la vanne 5 et au niveau de la partie de l'échangeur 2 du circuit de refroidissement 7.

Le procédé consiste ensuite à commander la vanne 5 en fonction des températures T1 et T3. Le mélange est transmis au moins en partie dans l'échangeur 2 lorsque la température T1 du mélange est supérieure à une température T2 déterminée et/ou lorsque la température T1 du mélange est inférieure à la température T3 de l'eau du circuit de refroidissement de l'échangeur air/eau. Le procédé de gestion selon l'invention permet en faisant passer tout ou partie du flux d'air suralimenté dans l'échangeur 2, même lorsque cet air suralimenté n'a pas besoin d'être refroidi, de refroidir l'eau du circuit de refroidissement.

Lorsque la température T1 du mélange est comprise entre la température T3 de l'eau du circuit de refroidissement et la température T2, le procédé de gestion commande la vanne 5 de sorte que le flux d'air suralimenté passe par la conduite 4 de dérivation. Cette commande correspond au cas où d'une part le mélange ne doit pas être refroidi dans l'échangeur et d'autre part le mélange ne peut refroidir l'eau du circuit de refroidissement compte tenu de la température T1 du mélange d'air de suralimentation supérieure à celle de l'eau de refroidissement T3.

Dans un mode de gestion la température T2 est fixe et correspond à une température optimale d'introduction du mélange d'air alimenté dans les chambres de combustion du moteur 9. Toutefois dans d'autres modes de gestion la température T2 pourra varier notamment en fonction de paramètres extérieurs tels que la température ambiante ou la température du moteur 9.

Le procédé de gestion permet également de commander l'ouverture de la vanne 5 de manière à varier la proportion de gaz d'admission transmis dans l'échangeur 2. Selon un premier mode de gestion avantageux, cette proportion varie en fonction de l'écart entre la température T1 et les températures T2 ou T3.

Selon un second mode avantageux cette proportion varie en fonction de la dynamique d'évolution de la température T1 de l'air suralimenté.

Bien entendu, d'autres caractéristiques de l'invention auraient également pu être envisagées sans pour autant sortir du cadre de l'invention définie par les revendications ci-après.

A titre d'exemple, dans une variante de réalisation les températures T1 et T3 seront non pas directement mesurées mais estimées à partir de paramètres et notamment en fonction de la température extérieure, de la densité de flux d'air suralimenté ou encore du régime moteur.

Dans une autre variante de réalisation le procédé de gestion comportera des moyens de détermination du point de rosée du mélange d'air suralimenté de manière à transmettre le flux d'air en totalité par les moyens de dérivation 3 lorsque la température T1 correspond au point de rosée du mélange d'air suralimenté.

## Revendications

1. Procédé de gestion d'un module d'échange air/eau pour la régulation en température des gaz d'admission d'un moteur thermique, ledit module comportant un échangeur air/eau et des moyens de dérivation permettant aux gaz d'admission de contourner l'échangeur, **caractérisé en ce que** les moyens de dérivation sont commandés de sorte que les gaz d'admission sont transmis au moins en partie dans l'échangeur lorsque la température T1 des gaz d'admission est inférieure à la température T3 de l'eau de l'échangeur air/eau.

2. Procédé de gestion d'un module selon la revendication 1, dans lequel les moyens de dérivation sont commandés de sorte que les gaz d'admission sont transmis au moins en partie dans l'échangeur lorsque la température T1 des gaz d'admission est supérieure à une température T2 prédéterminée.

3. Procédé de gestion d'un module selon l'une des revendications 1 à 2 dans lequel la température T2 est fixe.

4. Procédé de gestion d'un module selon l'une des revendications 1 à 3 dans lequel la proportion de gaz d'admission transmis à l'échangeur varie en fonction de l'écart entre la température T1 et les températures T2 ou T3.

5. Procédé de gestion d'un module selon l'une des revendications 1 à 4 dans lequel la proportion de gaz d'admission transmis à l'échangeur varie en fonction de la dynamique d'évolution de la température T1.

6. Procédé de gestion d'un module selon l'une des revendications 1 à 5 comportant une étape de mesure des températures T1 ou T3.

7. Procédé de gestion d'un module selon la revendication 1 à 6 comportant une étape d'estimation des températures T1 ou T3.

8. Procédé de gestion d'un module selon la revendication 1 à 9 dans lequel le flux d'air est transmis en totalité par les moyens de dérivation lorsque la température T1 correspond au point de rosée des gaz d'admission.

9. Unité de contrôle moteur **caractérisé en ce qu'**elle comporte un programme mettant en oeuvre le procédé selon l'une des revendications 1 à 8.

## Patentansprüche

1. Verfahren zum Verwalten eines Luft/Wassertauschmoduls zum Einstellen der Temperatur einer Einlassgasmischung in einem Verbrennungsmotor, wobei das Modul einen Luft/Wassertauscher und Mittel zum Ableiten umfasst, die es der Einlassgasmischung ermöglichen, den Tauscher zu umgehen, **dadurch gekennzeichnet, dass** die Mittel zum Ableiten derart gesteuert werden, dass die Einlassgasmischung mindestens teilweise in den Tauscher übertragen wird, wenn die Temperatur T1 der Einlassgasmischung kleiner ist als die Temperatur T3 des Wassers des Luft/Wassertauschers.

2. Verfahren zum Verwalten eines Moduls nach Anspruch 1, wobei die Mittel zum Ableiten derart gesteuert werden, dass die Einlassgasmischung mindestens teilweise in den Tauscher übertragen wird, wenn die Temperatur T1 der Einlassgasmischung größer ist als eine vorbestimmte Temperatur T2.

3. Verfahren zum Verwalten eines Moduls nach einem der Ansprüche 1 bis 2, wobei die Temperatur T2 festgelegt ist.

4. Verfahren zum Verwalten eines Moduls nach einem der Ansprüche 1 bis 3, wobei der Anteil der Einlassgasmischung, der in den Tauscher übertragen wird, in Abhängigkeit von der Differenz zwischen der Temperatur T1 und den Temperaturen T2 oder T3 variiert.

5. Verfahren zum Verwalten eines Moduls nach einem der Ansprüche 1 bis 4, wobei der Anteil der Einlassgasmischung, der in den Tauscher übertragen wird, in Abhängigkeit von der Entwicklungsdynamik der Temperatur T1 variiert.

6. Verfahren zum Verwalten eines Moduls nach einem der Ansprüche 1 bis 5, das einen Schritt zum Messen der Temperaturen T1 oder T3 umfasst.

7. Verfahren zum Verwalten eines Moduls nach Anspruch 1 bis 6, das einen Schritt zum Schätzen der Temperaturen T1 oder T3 umfasst.

8. Verfahren zum Verwalten eines Moduls nach Anspruch 1 bis 7, wobei der Luftstrom von den Mitteln zum Ableiten vollständig übertragen wird, wenn die Temperatur T1 dem Taupunkt der Einlassgasmischung entspricht.

9. Einheit zur Motorsteuerung, **dadurch gekennzeichnet, dass** sie ein Programm umfasst, das das Verfahren nach einem der Ansprüche 1 bis 8 umsetzt.

## Claims

1. Method for managing an air/water exchange module for regulating the temperature of the intake gases of a combustion engine, the said module comprising an air/water exchanger and branching means enabling the intake gases to bypass the exchanger, **characterized in that** the branching means are controlled such that the intake gases are transmitted at least in part into the exchanger when the temperature T1 of the intake gases is below the temperature T3 of the water of the air/water exchanger.

2. Method for managing a module according to Claim 1 in which the branching means are controlled such that the intake gases are transmitted at least in part into the exchanger when the temperature T1 of the intake gases is above a predetermined temperature T2.

3. Method for managing a module according to either of Claims 1 and 2, in which the temperature T2 is fixed.

4. Method for managing a module according to one of Claims 1 to 3, in which the proportion of intake gases transmitted to the exchanger varies as a function of the difference between the temperature T1 and the temperatures T2 or T3.

5. Method for managing a module according to one of Claims 1 to 4, in which the proportion of intake gases transmitted to the exchanger varies as a function of the dynamics of change in the temperature T1.

6. Method for managing a module according to one of Claims 1 to 5, comprising a step of measuring the temperatures T1 or T3.

7. Method for managing a module according to Claims 1 to 6, comprising a step of estimating the temperatures T1 or T3.

8. Method for managing a module according to Claims 1 to 7, in which the air flow is transmitted in its entirety by the branching means when the temperature T1 corresponds to the dew point of the intake gases.

9. Engine control unit, **characterized in that** it comprises a program implementing the method according to one of Claims 1 to 8.
